# EUROPÄISCHE PATENTSCHRIFT

(11) **EP 2 898 582 B1**
(45) Veröffentlichungstag und Bekanntmachung des Hinweises auf die Patenterteilung: **18.05.2016**
(21) Anmeldenummer: 14709967.5
(22) Anmeldetag: 14.03.2014
(51) Int. Cl.: H02J 3/42, H02J 3/38, H02M 7/44

(54) **VERFAHREN FÜR EINEN SCHWARZSTART EINES KRAFTWERKS MIT MEHREREN EINEM WECHSELSTROMNETZ ZUSCHALTBAREN WECHSELRICHTERN**
METHOD FOR BLACK START OF A POWER STATION COMPRISING A PLURALITY OF INVERTERS CONNECTABLE TO AN AC ELECTRICAL GRID
PROCÉDÉ DE DÉMARRAGE AUTONOME D'UNE CENTRALE ÉLECTRIQUE ÉQUIPÉE DE PLUSIEURS ONDULEURS CONNECTABLES À UN RÉSEAU À COURANT ALTERNATIF

(30) Priorität: 14.03.2013 DE 102013102603
(43) Veröffentlichungstag der Anmeldung: 29.07.2015
(73) Patentinhaber: SMA Solar Technology AG, 34266 Niestetal (DE)
(72) Erfinder: PREMM, Daniel, 34260 Kaufungen (DE); SCHÜTZ, Christian, 34393 Grebenstein (DE)
(86) Internationale Anmeldenummer: PCT/EP2014/055109
(87) Internationale Veröffentlichungsnummer: WO 2014/140281

(56) Entgegenhaltungen:
- US-A1- 2012 261 917
- WEI SUN ET AL: "Black start capability assessment in power system restoration", POWER AND ENERGY SOCIETY GENERAL MEETING, 2011 IEEE, IEEE, 24. Juli 2011 (2011-07-24), Seiten 1-7, XP032055770, DOI: 10.1109/PES.2011.6039752 ISBN: 978-1-4577-1000-1
- NIANNIAN CAI ET AL: "A hierarchical multi-agent control scheme for a black start-capable microgrid", POWER AND ENERGY SOCIETY GENERAL MEETING, 2011 IEEE, IEEE, 24. Juli 2011 (2011-07-24), Seiten 1-7, XP032055596, DOI: 10.1109/PES.2011.6039570 ISBN: 978-1-4577-1000-1

## Beschreibung

### TECHNISCHES GEBIET DER ERFINDUNG

Die Erfindung bezieht sich auf ein Verfahren für einen Schwarzstart eines Kraftwerks mit mehreren einem lokalen Wechselstromnetz zuschaltbaren Wechselrichtern. Weiterhin bezieht sich die Erfindung auf ein Kraftwerk mit mehreren einem lokalen Wechselstromnetz zuschaltbaren Wechselrichtern und einer übergeordneten Steuereinheit, die ein solches Verfahren für einen Schwarzstart umsetzt.

Unter einem Schwarzstart wird verstanden, dass ein Kraftwerk ohne externe Energiezufuhr hochgefahren wird. Das heißt, es steht keine elektrische Energie beispielsweise zum Unterhalt eines lokalen Wechselstromnetzes des Kraftwerks von extern zur Verfügung. Ursache kann sein, dass ein externes Wechselstromnetz, an das das lokale Wechselstromnetz beispielsweise über einen Transformator angebunden ist, zusammengebrochen ist oder dass einem solchen externen Wechselstromnetz keine Energie entnommen werden darf oder dass überhaupt kein externes Wechselstromnetz vorhanden ist, weil das lokale Wechselstromnetz ein Inselnetz ist.

Mit dem Begriff Wechselstromnetz wird hier primär die körperliche Einrichtung aus elektrischen Anschlüssen, Verbindungen, d. h. Leitungen, und dergleichen bezeichnet, nicht hingegen die an dieser Einrichtung anliegende bzw. von dieser Einrichtung bereitgestellte Wechselspannung. Unter einem lokalen Wechselstromnetz ist hier ein begrenztes Wechselstromnetz zu verstehen. Dabei kann es sich um ein internes Wechselstromnetz eines Kraftwerks handeln, solange dieses von einem externen Wechselstromnetz getrennt ist, aber auch um ein sogenanntes Inselnetz. Bei dem Inselnetz kann es sich sowohl um ein autarkes Inselnetz ohne Anbindung an ein externes Wechselstromnetz handeln. Gleichfalls kann das Inselnetz aber auch ein räumlich begrenzter, von einem übergeordneten Wechselstromnetz abtrennbarer Netzabschnitt sein, solange dieser von dem übergeordneten (externen) Wechselstromnetz abgetrennt ist. Häufig umfasst das lokale Wechselstromnetz jedoch keine zusätzlichen Lasten, die nicht mit dem Betrieb des lokalen Wechselstromnetzes zusammenhängen, oder diese Lasten sind während des Schwarzstarts abgeschaltet oder abgetrennt.

Die dem lokalen Wechselstromnetz zuschaltbaren Wechselrichter des Kraftwerks sind solche, mit denen elektrische Energie in das Wechselstromnetz einspeisbar ist. Grundsätzlich kann es sich dabei auch um bidirektionale Wechselrichter handeln, mit denen auch elektrische Energie aus dem Wechselstromnetz entnehmbar ist, um sie beispielsweise in einer Batterie zwischenzuspeichern.

Insbesondere stammt die elektrische Energie, die von den Wechselrichtern in das lokale Wechselstromnetz eingespeist wird, aus erneuerbaren Energiequellen, wie beispielsweise Windrädern bzw. daran angeschlossenen Generatoren und/oder Photovoltaikgeneratoren.

Der Begriff Kraftwerk bedeutet hier nicht mehr als die Mehrzahl der Wechselrichter, die an Energiequellen angeschlossen sind und mit denen elektrische Energie in das lokale Wechselstromnetz einspeisbar ist. Dabei kann es sich um ein Kraftwerk im engeren Sinne, beispielsweise einen Windpark oder einen Photovoltaik-Park handeln. Der Begriff Kraftwerk umfasst aber auch jede sonstige Mehrzahl von Wechselrichter aufweisenden Energieerzeugungseinheiten, die an irgendein lokales Wechselstromnetz, beispielsweise an einen mit einem übergeordneten Wechselstromnetz abtrennbar verbundenen Netzabschnitt, angeschlossen sind.

### STAND DER TECHNIK

Beim Schwarzstart eines Kraftwerks mit einer Vielzahl von einem lokalen Wechselstromnetz zuschaltbaren Wechselrichtern besteht eine Problematik darin, dass der Eigenbedarf des lokalen Wechselstromnetzes aufgrund von Transformatorverlusten, Verkabelungsimpedanzen usw., der von dem Kraftwerk selbst aufgebracht werden muss, über die elektrische Energie hinausgeht, die von einem einzelnen Wechselrichter zuverlässig bereitgestellt werden kann. Es wäre jedoch sehr schwierig, dem lokalen Wechselstromnetz mehrere Wechselrichter zur gleichen Zeit zuzuschalten, insbesondere, solange in dem lokalen Wechselstromnetz noch gar keine Wechselspannung vorliegt.

Aus der DE 103 20 087 A1 sind ein Verfahren zum Betreiben eines Windparks und ein Windpark mit einer zentralen Vorrichtung zur Steuerung des Windparks bekannt. Um den Windpark schwarzstartfähig zu machen, umfasst dieser eine permanent erregte Windenergieanlage mit motorloser Windrichtungsnachführung. Diese permanent erregte Windenergieanlage kann auch dann angefahren werden, wenn keine Energie von extern bezogen werden kann. Mit Hilfe der elektrischen Energie von der permanent erregten Windenergieanlage wird zunächst wenigstens eine erste Windenergieanlage angefahren, die nicht permanent erregt ist und mit einem Motor der Windrichtung nachgeführt wird. Diese Windenergieanlage baut über einen selbstgeführten Wechselrichter Nennfrequenz und Nennspannung eines lokalen Wechselstromnetzes wieder auf, an das die Windkraftanlagen des Windparks angeschlossen sind. Die übrigen Windenergieanlagen können sich mit der Wechselspannung in dem lokalen Wechselstromnetz synchronisieren und mit dem Einspeisen von Leistung beginnen. Dies kann je nach Bedarf Blindleistung und/oder Wirkleistung sein. Den anfänglichen Energiebedarf können die übrigen Windenergieanlagen dabei über das lokale Wechselstromnetz decken. Voraussetzung für die Durchführbarkeit dieses bekannten Verfahrens ist, dass der Windpark eine besondere permanent erregte Windenergieanlage mit motorloser Windrichtungsnachführung umfasst und dass die nicht permanent erregte erste Windenergieanlage, mit der das lokale Wechselstromnetz aufgebaut wird, ausreichend elektrische Energie bereitstellt, um den Eigenbedarf des lokalen Wechselstromnetzes zu decken.

Aus der EP 1 993 184 A1 sind ein Verfahren für einen Schwarzstart eines Windparks und ein Windpark bekannt, bei denen der Eigenbedarf eines lokalen Wechselstromnetzes anfänglich durch eine lokale Energiequelle in Form einer großen Batterie, einer unterbrechungsfreien Stromversorgung oder eines Generators, wie beispielsweise eines Dieselgenerators oder einer Brennstoffzelle, gedeckt wird. Die von dieser lokalen Energiequelle über das lokale Wechselstromnetz bereitgestellte Energie wird verwendet, um zunächst mindestens eine erste Windkraftanlage zu starten. Danach werden sukzessive weitere Windkraftanlagen mit der anwachsenden zur Verfügung stehenden Energie angefahren. Hier muss die lokale Leistungsquelle das lokale Wechselstromnetz, an das die einzelnen Windkraftanlagen angeschlossen sind, aufbauen und entsprechend den gesamten Eigenbedarf dieses Netzes decken. Darüber hinaus muss sie die für das Anfahren der ersten Windkraftanlage benötigte elektrische Leistung bereitstellen. Entsprechend muss diese zusätzlich vorzusehende lokale Leistungsquelle groß dimensioniert werden.

Aus der US 2012/0261917 A1 ist ein Verfahren für einen Schwarzstart von Windkraftanlagen bekannt, bei dem ein Dieselgenerator eine vorgegebene Wechselspannung an den Ausgang einer Windkraftanlage anlegt, um eine Nennwechselspannung eines laufenden lokalen Netzwerks zu imitieren. Dabei wird die von den Windkraftanlagen beim Bereitstellen der Nennspannung zu erzeugende Wirkleistung und Blindleistung zunächst auf null gesetzt, um ein sprungfreies Zuschalten zu ermöglichen. Das Zuschalten erfolgt schrittweise Windkraftanlage für Windkraftanlage. Auch hier muss der Dieselgenerator in der Lage sein, den Eigenbedarf des lokalen Wechselstromnetzes, dem die Windkraftanlagen zugeschaltet werden, zu decken.

Eine anfängliche Deckung des Eigenbedarfs bei einem Schwarzstart eines Windparks mit mehreren Windkraftanlagen aus einem Energiespeicher und ein anschließendes schrittweises Zuschalten der Windkraftanlagen sind auch aus der WO 2011/058170 A1 bekannt.

Zur Koordination des Betriebs mehrerer parallel an ein Wechselstromnetz angeschlossener spannungsstellender Wechselrichter, also von Wechselrichtern die eine vorgegebene Spannung aufbauen, ohne direkte Kommunikation der Wechselrichter untereinander ist aus der EP 1 286 444 B1 die Verwendung sogenannter Frequenz- und Spannungsstatiken bekannt. Mit dem Begriff Frequenzstatik wird dabei eine in den Wechselrichtern abgelegte Frequenz-Wirkleistungs-Kennlinie bezeichnet, die zum Steuern der Frequenz der von den Wechselrichtern ausgegebenen Wechselspannung in Abhängigkeit von der von den Wechselrichtern abgegebenen Wirkleistung verwendet wird: Im spannungsstellenden Betrieb der Wechselrichter ergibt sich die Wirkleistung aus der vorliegenden Impedanz. Je nach ausgegebener Wirkleistung und hinterlegter Frequenzstatik stellen die Wechselrichter ihre Frequenz ein. Mit dem Begriff "Spannungsstatik" wird hingegen eine in den Wechselrichtern abgelegte Spannungs-Blindleistungs-Kennlinie bezeichnet, die zum Steuern der Höhe oder Amplitude der von den Wechselrichtern ausgegebenen Wechselspannung in Abhängigkeit von der von den Wechselrichtern abgegebenen Blindleistung verwendet wird: Im spannungsstellenden Betrieb der Wechselrichter ergibt sich auch die Blindleistung aus der vorliegenden Impedanz. Als Reaktion auf die ausgegebene Blindleistung stellen die Wechselrichter eine - in Bezug auf einen Referenzwert für das Spannungsstellen korrigierte - Spannungsamplitude unter Berücksichtigung der hinterlegten Spannungsstatik am Ausgang ein.

Bei stromstellenden Wechselrichtern, also bei Wechselrichtern die einen vorgegebenen Strom ausgeben, gibt die Frequenzstatik ebenfalls die Beziehung zwischen der ausgegebenen Wirkleistung P und der Frequenz f der am Ausgang des Wechselrichters anliegenden Wechselspannung an. Die Spannungsstatik ist entsprechend die Beziehung zwischen der von dem Wechselrichter ausgegebenen Blindleistung Q und der an seinem Ausgang anliegenden Wechselspannung. Mit der "an dem Ausgang anliegenden Wechselspannung" ist hier wie generell in dieser Anmeldung die Größe dieser Wechselspannung gemeint. Unter Verwendung von Frequenz- und Spannungsstatiken kann auch die Koordination des Betriebs mehrerer parallel an ein Wechselstromnetz angeschlossener stromstellender Wechselrichter erfolgen. Auch in gemischten Gruppen von spannungsstellenden und stromstellenden Wechselrichtern ist eine Koordination des Betriebs mit Hilfe von Frequenz- und Spannungsstatiken möglich.

Die nach dem Prioritätstag der vorliegenden Patentanmeldung veröffentlichte EP 2 632 012 A1 beschäftigt sich mit der Herausforderung, dass bei einem Schwarzstart eines dezentralen elektrischen Energieversorgungsnetzes alle angeschlossenen Netzbildner einen gemeinsamen Arbeitspunkt zum Aufbau einer stabilen Netzspannung finden. Der Betrieb der Netzbilder erfolgt dabei mit Hilfe von Statikkennlinien, die eine von dem elektrischen Energieversorgungsnetz abgerufene elektrische Leistung der Netzspannung gegenüberstellen. Jeder Netzbildner ermittelt mit Hilfe seiner Statikkennlinien seine aktuelle einzuspeisende Spannung. Ein im elektrischen Energieversorgungsnetz aufeinander abgestimmter Arbeitspunkt zwischen mehreren Netzbildnern ist erreicht, wenn alle Netzbildner eine gleiche einzuspeisende Spannung abgeben. Nach der EP 2 632 012 A1 wäre es am günstigsten, zunächst einen einzigen Netzbildner die Netzspannung vorgeben zu lassen, und die restlichen Netzbildner dann zu dem elektrischen Energieversorgungsnetz dazu zu schalten. Inselnetze zeichnen sich jedoch durch eine geringe Hierarchie aus. Die Netzbildner können hier nur gemeinsam mit den Verbraucherlasten verschaltet werden. Durch die angeschlossenen Verbraucher kann die während des Schwarzstarts vorhandene Verbraucherlast für diesen einzelnen Netzbildner jedoch zu groß sein, um die Netzspannung zu erzeugen. Deshalb erfolgt der Schwarzstart mit mindestens zwei koordinierten Netzbildnern gemeinsam. Diese Koordination könnte asynchron erfolgen, wobei sich jeder der zu koordinierenden Netzbildner anhand ihrer eigenen aktuell in das elektrische Energieversorgungsnetz eingespeisten Leistung über die Statikkennlinie die in das Netz einzuspeisende Spannung berechnen. Dem steht jedoch die Erkenntnis entgegen, dass sich auf dem asynchronen Weg eine gemeinsame Netzspannung nicht einstellen lässt, wenn einer der koordinierten Netzbildner auf seiner Statikkennlinie den anderen Netzbildnern nicht schnell genug folgen kann, weil er zum Beispiel eine Stromgrenze besitzt, die er nicht überschreiten kann. Dieses Problem könnte nach Aussage der EP 2 632 012 A1 zwar auf synchronem Weg gelöst werden, indem ein gemeinsamer Master die Sollwerte für die Netzspannung hart vorgibt. Auf diese Weise könnte vermieden werden, dass den Netzbildnern aufgrund zu kleiner temporärer Netzspannungen zu große Ströme abverlangt werden. Jedoch müsste jeder einzelne Netzbildner mit dem Master verbunden sein, was gerade bei räumlich über mehrere Kilometer verteilten Netzbildnern zu erheblichen Kosten, einer hohen Störanfälligkeit und damit zu einer unzureichenden Verfügbarkeit führen kann.

Demgegenüber ist es Idee der EP 2 632 012 A1, den auf seiner Statikkennlinie stehengebliebenen Netzbildner zu bewegen, und quasi einen Schubs zu geben, so dass er sich wieder auf seiner Statikkennlinie bewegen kann. Dies wird dadurch erreicht, dass dann, wenn der Netzbildner auf seiner Statikkennlinie stehen geblieben ist, er auf einen neuen Punkt auf der Statikkennlinie verschoben wird, aus dem er für die abzugebende Leistung einen Strom unterhalb seiner Stromgrenze abgeben muss. Somit kann er durch den nun wieder variablen Ausgangsstrom seine an das elektrische Energieversorgungsnetz abzugebende Leistung erhöhen und sich frei auf der Statikkennlinie bewegen. Die EP 2 632 012 A1 offenbart daher ein Verfahren zum Synchronisieren einer Einspeisespannung mit einer Netzspannung eines elektrischen Energieversorgungsnetzes, wobei eine Eigenschaft der Einspeisespannung basierend auf einer Statikkennlinie bestimmbar ist, wobei die Statikkennlinie die Eigenschaft der Einspeisespannung einer Einspeiseleistung gegenüberstellt, wobei die Einspeiseleistung durch das elektrische Energieversorgungsnetz bei der angelegten Einspeisespannung aufgenommen wird, und wobei die Eigenschaft der Einspeisespannung an einen bestimmten Wert angepasst wird, wenn eine Grenze für die Einspeiseleistung erreicht ist. Die Eigenschaften der Einspeisespannung beziehungsweise der Netzspannung sind beispielsweise die Frequenz, Phasenlage und/oder der Effektivwert der entsprechenden Spannung. Bei einem Schwarzstart des Energieversorgungsnetzes werden alle beteiligten Netzbildner durch ein Einschaltsignal synchron gestartet und über das elektrische Energieversorgungsnetz untereinander synchronisiert. Dabei reicht es aus, wenn ein Master an einen der Netzbildner angeschlossen ist, der diesem Netzbildner das Startsignal gibt. Auch wenn es gemäß der EP 2 632 012 A1 so sein können soll, dass alle Netzbildner als Energieerzeuger einen Wechselrichter aufweisen, der ausgebildet ist, elektrische Energie aus einer Gleichspannungsquelle in eine Einspeisespannung umzuwandeln, ist der vom Master gestartete Netzbildner konkret ein Dieselgenerator, der einen anfänglichen Spannungsanstieg in Form einer Spannungsrampe erzeugt. Den Spannungsanstieg messen alle anderen Netzbildner, um in den Schwarzstart des elektrischen Energieversorgungsnetzes einzusteigen, und er wird dabei zum Start der elektrischen Leistungsabgabe von Wechselrichtern herangezogen, die als Netzbildner an das Energieversorgungsnetz angeschlossen sind.

Aus der EP 2 190 110 B1 ist ein Verfahren zur Ermittlung der Belastbarkeit einer über einen Wechselrichter und einen Netzschalter einem Wechselstromnetz mit einer vorgegebenen Netzfrequenz zuschaltbaren Gleichspannungsquelle bekannt. Bei diesem Verfahren wird eine Eingangsgleichspannung des Wechselrichters, bei der es sich um die Ausgangsspannung der Gleichspannungsquelle oder eine Spannung in einem Zwischenkreis des Wechselrichters handeln kann, bei geöffnetem Netzschalter und bei einer einen Vier-Quadrantenbetrieb ermöglichenden Ansteuerung des Wechselrichters erfasst. Der Wechselrichter wird so angesteuert, dass er die Eingangsgleichspannung auf eine von der Netzfrequenz abweichende Prüffrequenz wechselrichtet. Abweichend bedeutet in diesem Zusammenhang, dass die Prüffrequenz sowohl niedriger als auch höher als die Netzfrequenz sein kann. Häufig wird sie höher als die Netzfrequenz sein. Bei geeigneter Wahl der Prüffrequenz in Hinblick auf den jeweiligen Wechselrichter und seine Einsatzumgebung kann auf diese Weise eine auf die Gleichspannungsquelle einwirkende Prüflast erheblich über den Eigenbedarf des Wechselrichters bei der Netzfrequenz erhöht werden. Konkret kann sie auf ein Niveau gebracht werden, das der Belastung der Gleichspannungsquelle bei ihrer Netzzuschaltung entspricht, so dass eine Netzzuschaltung einerseits möglichst frühzeitig, andererseits jedoch ohne eine Gefahr einer neuerlichen Netztrennung erfolgt.

Weiterhin ist in dem Paper "Black Start Capability Assessment in Power System Restoration" von Wei Sun et al., IEEE2011, eine verbesserte Systematik zur Platzierung und Dimensionierung von Schwarzstarteinrichtungen zur Reduzierung der Erholungszeit nach einem Netzausfall beschrieben.

Abschließend beschreibt das Paper "A Hierarchical Multi-agent Control Scheme for a Black Start-Capable Microgrid" von Niannian Cai, IEEE 2011, eine hierarchische Kontrollstruktur für ein Teilnetz, das sowohl im Inselzustand als auch im an ein übergeordnetes Netz angeschlossenem Zustand betreibbar ist, mit der Möglichkeit zum Schwarzstart, wenn der Übergang in einen Inselzustand fehlschlägt.

### AUFGABE DER ERFINDUNG

Der Erfindung liegt die Aufgabe zugrunde, ein Verfahren für einen Schwarzstart eines Kraftwerks mit mehreren einem lokalen Wechselstromnetz zuschaltbaren Wechselrichtern aufzuzeigen, das ohne Investition in spezielle Energiequellen zur Versorgung während des Schwarzstarts durchführbar ist. Weiterhin soll ein Kraftwerk mit mehreren einem lokalen Wechselstromnetz zuschaltbaren Wechselrichtern und einer übergeordneten Steuereinheit für die Durchführung eines solchen Verfahrens aufgezeigt werden.

### LÖSUNG

Die Aufgabe der Erfindung wird durch ein Verfahren mit den Merkmalen des unabhängigen Patentanspruchs 1 und durch ein Verfahren mit den Merkmalen des unabhängigen Patentanspruchs 12 gelöst. Die abhängigen Patentansprüche 2 bis 11 sowie 13 sind auf bevorzugte Ausführungsformen der erfindungsgemäßen Verfahren gerichtet. Der Patentanspruch 14 betrifft ein Kraftwerk mit einer übergeordneten Steuereinheit, die eines der erfindungsgemäßen Verfahren umsetzt; und der Patentanspruch 15 ist auf eine bevorzugte Ausführungsform des erfindungsgemäßen Kraftwerks gerichtet.

### BESCHREIBUNG DER ERFINDUNG

Bei dem ersten erfindungsgemäßen Verfahren für einen Schwarzstart eines Kraftwerks mit mehreren einem lokalen Wechselstromnetz zuschaltbaren Wechselrichtern, wobei mit einem ersten Wechselrichter eine Wechselspannung in dem Wechselstromnetz aufgebaut wird und wobei mindestens ein zweiter Wechselrichter nach Synchronisation mit der Wechselspannung dem Wechselstromnetz zugeschaltet wird, ist die mit dem ersten Wechselrichter aufgebaute erste Wechselspannung gegenüber einer Nennspannung des Wechselstromnetzes um mindestens ein Viertel, vorzugsweise mindestens die Hälfte reduziert, und nach dem Zuschalten des zweiten Wechselrichters wird eine gegenüber der ersten Wechselspannung erhöhte zweite Wechselspannung in dem Wechselstromnetz aufgebaut.

Indem die erste Wechselspannung, die allein mit dem ersten Wechselrichter in dem Wechselstromnetz aufgebaut wird, um einen signifikanten Betrag von mindestens einem Viertel gegenüber der Nennspannung des Wechselstromnetzes reduziert ist, die erste Wechselspannung also maximal 75 % der Nennspannung beträgt, reduziert sich der Eigenbedarf des Wechselstromnetzes, der primär von den Leitungskapazitäten der Verkabelung und damit quadratisch von der Wechselspannung in dem Wechselstromnetz abhängt, auf nicht mehr als 56,25 % seines Wertes bei der Nennspannung. Zugleich reduziert sich die bei gleichbleibendem Nennstrom linear von der Wechselspannung in dem Wechselstromnetz abhängige Leistungsfähigkeit des ersten Wechselrichters bei der ersten Wechselspannung nur auf 75 % des entsprechenden Wertes bei der Nennspannung. Verglichen mit einem direkten Aufbauen der Nennspannung des Wechselstromnetzes wird der erste Wechselrichter bei dem erfindungsgemäßen Verfahren bezogen auf seine Leistungsfähigkeit also allenfalls zu drei Vierteln belastet. Wenn die erste Wechselspannung beispielsweise 1/2 oder sogar nur 1/5 der Nennspannung des Wechselstromnetzes beträgt, reduziert sich der Eigenbedarf auf 1/4 bzw. 1/25 und damit die auf die Leistungsfähigkeit des ersten Wechselrichter bezogene Belastung auf 1/2 bzw. 1/5. Zumindest 1/5 des Eigenbedarfs des lokalen Wechselstromnetzes ist in der Regel schon deutlich weniger als der erste Wechselrichter auch als einer von vielen im Normalbetrieb des Kraftwerks sowieso leistet. In jedem Fall kann durch die Reduktion der ersten Wechselspannung gegenüber der Nennspannung des Wechselstromnetzes die auf die Leistungsfähigkeit des ersten Wechselrichters bezogene Belastung beim Aufbauen der ersten Wechselspannung gegenüber dem ebenfalls auf die Leistungsfähigkeit des ersten Wechselrichters bezogenen Eigenbedarf des Wechselstromnetzes bei seiner Nennspannung auf einfache Weise so weit reduziert werden, dass der erste Wechselrichter dieser Belastung problemlos standhalten kann. Dies gilt insbesondere auch dann, wenn der entsprechende Wechselrichter für den Schwarzstart, konkret das Wiederanfahren des Wechselstromnetzes von Spannung null, nicht speziell ausgebildet ist.

Bei dem erfindungsgemäßen Verfahren erfolgt das Aufbauen der Wechselspannung in dem Wechselstromnetz in mindestens zwei diskreten Stufen. Bereits in der ersten Stufe baut mit dem ersten Wechselrichter ein Wechselrichter die erste Wechselspannung auf, der anders als ein Dieselgenerator, beispielsweise aufgrund einer im Wechselrichter vorhandenen Strombegrenzung, für sich genommen zur Bewältigung des Schwarzstarts nicht geeignet wäre. Nach dieser ersten und ggf. den folgenden Stufen erfolgt ein genau koordiniertes Zuschalten der weiteren Wechselrichter und ein ebenso genau koordiniertes Aufbauen der nächsten Wechselspannung mit allen dann zugeschalteten Wechselrichtern. Dazu kann ein entsprechender Ablaufplan für den Schwarzstart in allen beteiligten Wechselrichtern abgelegt sein; vorzugsweise wird der Schwarzstart jedoch von einem gemeinsamen Master aller Wechselrichter koordiniert. Der gemeinsame Master fungiert als übergeordnete Steuereinheit der Wechselrichter und wird im Falle eines Photovoltaik- (PV-) oder Windparks als Parkregler bezeichnet. Für den Fall eines Inselnetzes mit mehreren Energieerzeugungseinheiten, beispielsweise einen räumlich begrenzten, mit einem übergeordneten Wechselstromnetz abtrennbar verbundenen Netzabschnitt wird die übergeordnete Steuereinheit als Inselnetzregler bezeichnet.

Die zweite Wechselspannung kann bei dem anmeldungsgemäßen Verfahren das 1,2- bis 3-fache, insbesondere das 2-fache der ersten Wechselspannung betragen. Beim 2-fachen ist die absolute Last, mit der der erste Wechselrichter und der zweite Wechselrichter beim Aufbauen der zweiten Wechselspannung beaufschlagt werden, viermal so groß wie die absolute Last, mit der der erste Wechselrichter allein beim Aufbauen der ersten Wechselspannung beaufschlagt wurde. Diese viermal so große absolute Last verteilt sich jedoch - vorteilhafterweise zu gleichen Teilen - auf zwei Wechselrichter, die bei der zweiten Wechselspannung, welche doppelt so hoch wie die erste Wechselspannung ist, zudem jeweils eine verdoppelte Leistungsfähigkeit aufweisen. Die auf die Leistungsfähigkeit der Wechselrichter bezogene relative Last oder Belastung steigt also beim Aufbauen einer zweiten Wechselspannung, die doppelt so groß wie die erste Wechselspannung ist, nicht an.

Auch die zweite Wechselspannung ist typischerweise noch deutlich, das heißt mindestens um das 0,2-fache, häufig das 0,5-fache der ersten Wechselspannung kleiner als die Nennspannung des Wechselstromnetzes. In den meisten Fällen bleibt sie um mindestens das 1-fache der ersten Wechselspannung hinter der Nennspannung zurück.

So kann bei dem erfindungsgemäßen Verfahren ein dritter Wechselrichter nach Synchronisation mit der zweiten Wechselspannung dem Wechselstromnetz zugeschaltet und nach dem Zuschalten des dritten Wechselrichters eine gegenüber der zweiten Wechselspannung erhöhte dritte Wechselspannung in dem Wechselstromnetz aufgebaut werden. Auch diese dritte Wechselspannung kann noch um mindestens das 0,2-fache oder das 0,5-fache der ersten Wechselspannung kleiner als die Nennspannung des Wechselstromnetzes sein, so dass die volle Nennspannung erst in einem folgenden Schritt mit vier oder mehr Wechselrichtern aufgebaut wird.

Dabei kann eine Differenz zwischen nacheinander aufgebauten Wechselspannungen jeweils das 0,2- oder 0,5- bis 2-fache der ersten Wechselspannung betragen. Vorzugsweise ist die Differenz zwischen nacheinander aufgebauten Wechselspannungen immer gleich und genau so groß wie die erste Wechselspannung.

Die Anzahl der Wechselrichter, mit denen die Nennspannung stufenweise aufgebaut wird, hängt typischerweise von der Größe des jeweiligen Kraftwerks, d. h. der Anzahl der Wechselrichter ab. Hierbei ist sowohl ein sequentielles Zuschalten einzelner Wechselrichter derart möglich, dass in jeder Stufe stets genau ein weiterer Wechselrichter in Betrieb genommenen wird. Gleichfalls ist ein sequentielles Zuschalten der Wechselrichter derart möglich, dass nach dem ersten in Betrieb genommenen Wechselrichter - also ab der zweiten Stufe - jeweils eine Gruppe aus mehreren Wechselrichtern innerhalb einer Stufe dem lokalen Wechselstromnetz zugeschaltet wird. Hierbei ist jedoch darauf zu achten, dass die mit steigender Anzahl an gleichzeitig zuzuschaltenden Wechselrichtern steigenden Ausgleichsströme einen vorgegebenen Maximalwert nicht überschreiten. Dazu können die innerhalb einer Stufe zuzuschaltenden Wechselrichter dem Wechselstromnetz auch kurz hintereinander zugeschaltet werden, so dass die einzelnen Ausgleichsströme nicht zeitgleich auftreten und sich überlagern. Zudem ist es zwar einerseits wünschenswert, den Schwarzstart des Kraftwerkes möglichst rasch, und damit in möglichst wenig aufeinanderfolgenden Stufen zu realisieren. Auf der anderen Seite ist jedoch zu berücksichtigen, dass die dem lokalen Wechselstromnetz zugeschalteten Wechselrichter während der gesamten Dauer des Schwarzstarts nie an den Rand ihrer - von der aktuell vorliegenden Wechselspannung abhängigen - Leistungsfähigkeit hin belastet werden. Vorzugsweise sollte stets eine ausreichende Regelreserve von mindestens 20 % zwischen einer aktuellen Ausgangsleistung des Wechselrichters und seiner Leistungsfähigkeit bei der jeweiligen Wechselspannung vorgesehen werden. Dies gewährleistet die Existenz eines Regelbereiches, um auf unvorhergesehene Ereignisse während des Schwarzstarts, beispielsweise den Leistungseinbruch eines einzelnen Wechselrichters, reagieren zu können. In aller Regel wird die Anzahl der Stufen zwischen drei und zehn liegen. Meistens liegt sie zwischen vier und sechs. Oft sind fünf Stufen passend.

Um große Ausgleichsströme zu vermeiden, wird jeder Wechselrichter dem Wechselstromnetz möglichst leistungslos zugeschaltet. Um dies zu erreichen, können eine Spannungsstatik und eine Frequenzstatik des jeweiligen Wechselrichters so verschoben werden, dass beim Zuschalten idealer Weise keine Leistung in das Wechselstromnetz fließt. Zwar lassen sich in der Realität gewisse Ausgleichsströme unmittelbar nach dem Zuschalten - und ein damit einhergehender Leistungsfluss - aufgrund stets vorhandener Toleranzen bei der Synchronisation der Wechselrichter an die lokale Wechselspannung nicht vollständig vermeiden. Durch eine optimierte Verschiebung der Frequenzstatik und Spannungsstatik lassen sie sich jedoch auf ein unbedenkliches Maß reduzieren. Dies kann unter Beibehaltung einer Frequenzstatik der bereits zugeschalteten und einer entsprechenden Absenkung der Frequenzstatik des zuzuschaltenden Wechselrichters erfolgen.

Das leistungslose Zuschalten des jeweiligen Wechselrichters ist aber auch zu erreichen, indem bei dem zuzuschaltenden Wechselrichter nur eine Verschiebung der Spannungsstatik, nicht aber der Frequenzstatik erfolgt. Die Frequenzstatik kann beim Zuschalten ihre Anfangscharakteristik beibehalten. In dieser Ausführungsform werden bei den bereits zugeschalteten Wechselrichtern vor dem Zuschalten des weiteren Wechselrichters beide Statiken verschoben, wobei die Frequenzstatiken der bereits zugeschalteten Wechselrichter angehoben werden. Beim Zuschalten des ersten Wechselrichters zu dem Wechselstromnetz ist die Lage seiner Frequenzstatik nicht entscheidend, da bei nur einem Wechselrichter an dem lokalen Wechselstromnetz mit der Frequenzstatik keine Lastverteilung bewirkt wird. Insbesondere müssen nach dem leistungslosen Zuschalten des ersten Wechselrichters nicht - wie dies nach dem Zuschalten jedes weiteren Wechselrichters sinnvoll ist - Maßnahmen zur Verteilung der Last auf alle dem Wechselstromnetz zugeschalteten Wechselrichter ergriffen werden. Der erste Wechselrichter kann jedoch nach seinem Zuschalten die erste Wechselspannung in dem Wechselstromnetz beginnend mit der Nennfrequenz des Wechselstromnetzes aufbauen. Das Zuschalten des ersten Wechselrichters erfolgt bei Ausgangsspannung null bzw. nahe null. Durch Anheben der Spannungsstatik wird die Ausgangsspannung des Wechselrichters auf die erste Wechselspannung angehoben.

Zur Verteilung der Last auf alle dem Wechselstromnetz zugeschalteten Wechselrichter nach dem Zuschalten des zweiten Wechselrichters und aller weiterer Wechselrichter können eine Frequenzstatik und eine Spannungsstatik des zuletzt zugeschalteten Wechselrichters und die Frequenzstatiken und Spannungsstatiken aller schon zuvor zugeschaltet gewesenen Wechselrichter aneinander angepasst werden. Die Anpassung der Frequenzstatiken und Spannungsstatiken, die bei gleichen Wechselrichtern ein Angleichen dieser Statiken sein kann, führt dazu, dass alle Wechselrichter gleichmäßig, insbesondere gleich mit dem Eigenbedarf des Wechselstromnetzes bei der jeweiligen Wechselspannung beaufschlagt werden. Es ist jedoch auch möglich, die Aufteilung der Last unter Berücksichtigung einer individuell unterschiedlichen Nominalleistung der einzelnen Wechselrichter vorzunehmen. In diesem Fall wird die Last nicht gleichmäßig auf die Wechselrichtern verteilt, sondern ein Wechselrichter mit einer höheren Nominalleistung übernimmt einen etwas größeren Lastanteil als die übrigen Wechselrichter mit entsprechend geringerer Nominalleistung.

Nachdem die Last auf alle Wechselrichter verteilt wurde, können zum Aufbauen der nächsten Wechselspannung Spannungsstatiken aller dem Wechselstromnetz zugeschalteten Wechselrichter parallel angehoben werden. Wenn nur der erste Wechselrichter dem Wechselstromnetz zugeschaltet ist, wird entsprechend nur seine Spannungsstatik angehoben.

Durch den mit zunehmender Wechselspannung in dem Wechselstromnetz ansteigenden Eigenbedarf des Wechselstromnetzes sinkt die Frequenz der Wechselspannung in dem Wechselstromnetz ab. Diese kann nach dem Aufbauen der Wechselspannung durch Anheben der Frequenzstatiken aller dem Wechselstromnetz zugeschalteten Wechselrichter wieder auf die Nennfrequenz des Wechselstromnetzes erhöht werden. Dieser Schritt wird vorzugsweise auch mit dem ersten Wechselrichter durchgeführt, wenn dieser allein die erste Wechselspannung in dem Wechselstromnetz aufbaut.

Alternativ ist es auch möglich, dass nicht die Frequenzstatik der bereits zugeschalteten Wechselrichter, sondern die Frequenzstatik der im nächsten Schritt zuzuschaltenden Wechselrichter verschoben wird. Auch auf diese Weise lässt sich ein leistungsloses Zuschalten der dem lokalen Wechselstromnetz zuzuschaltenden Wechselrichter realisieren. Nach erfolgtem Zuschalten werden auch hier die Frequenzstatiken und Spannungsstatiken aller dem Wechselstromnetz zugeschalteten Wechselrichter angeglichen, und somit der gesamte Eigenbedarf bei der jeweiligen Wechselspannung gleichmäßig auf die aktuell zugeschalteten Wechselrichter verteilt.

Die dem Wechselstromnetz in der zweiten und folgenden Stufen des erfindungsgemäßen Verfahrens zugeschalteten Wechselrichter wurden in der Beschreibung der Erfindung bislang als spannungsstellende Wechselrichter unterstellt. Es ist auch bevorzugt, wenn die Wechselrichter zumindest während des Schwarzstarts sämtlich spannungsstellend betrieben werden. Zwingend muss jedoch nur der erste Wechselrichter einen spannungsstellenden Betrieb erlauben. Bei den weiteren Wechselrichtern kann es sich zumindest teilweise auch um stromstellend betriebene Wechselrichter handeln. Stromstellende Wechselrichter können beispielsweise nach dem leistungslosen Zuschalten zu dem Wechselstromnetz von einem ausgegebenen Strom null auf einen festen Strom hochgefahren werden, den sie anschließend beibehalten. Die von ihnen übernommene Last steigt dann mit der stufenweisen Erhöhung der Wechselspannung in dem Wechselstromnetz an. Bei dieser Vorgehensweise, die einer konstant horizontalen Leistungs-Frequenz-Kennlinie der stromstellenden Wechselrichter entspricht, beteiligen sich die stromstellenden Wechselrichter nicht an der Netzregelung in dem Wechselstromnetz. Eine solche Beteiligung ist aber durch geeignete Abstimmung aller Spannungs- und Frequenzstatiken ebenfalls realisierbar. Vorteilhafterweise ist bei einem hybriden Betrieb während des Schwarzstarts, d. h, einem gleichzeitigen Betrieb von spannungsstellenden und stromstellenden Wechselrichtern, die vorzuhaltende Regelreserve der spannungsstellenden Wechselrichter deutlich größer als mindestens 20 %, vorteilhafterweise beträgt sie mindestens 50 %. Dies resultiert daraus, dass bei Erhöhung der Wechselspannung ein Großteil der Last zunächst von den spannungsstellenden Wechselrichtern aufgebracht werden muss, während die stromstellenden Wechselrichter erst auf Basis der Frequenz reagieren, die seitens der spannungsstellenden Wechselrichter ausgegeben wird.

Zur Vermeidung von Unklarheiten sei festgehalten: Zur Netzbildung sind grundsätzlich spannungsstellende Wechselrichter erforderlich. Ihnen sind seitens ihrer Steuerung typische Generatorkennlinien f(P) bzw. u(Q) aufgeprägt. Sie wirken in dem Wechselstromnetz jeweils als Spannungsquelle, deren Ausgangsleistungen sich aus der an ihren Ausgang angeschlossenen Impedanz ergibt. Die Wirkleistungsabgabe spannungsstellender Wechselrichter hat jedoch - ähnlich wie bei einem Generator - einen Einfluss auf die Wechselspannung am Ausgang. Je mehr Wirkleistung abgegeben wird, desto kleiner wird die Frequenz der Wechselspannung. Gleiches gilt für die Blindleistung: die Spannungsamplitude der Wechselspannung am Ausgang spannungsstellender Wechselrichter ist abhängig von der abgegebenen Blindleistung. Mit Hilfe der Generatorkennlinien f(P) bzw. u(Q) wird also ein Verhalten des Wechselrichters erreicht, das demjenigen einer elektrischen Maschine als Generator gleicht.

Stromstellende Wechselrichter arbeiten netzstützend, wenn in ihnen P(f) und Q(u) Kennlinien hinterlegt sind. Das bedeutet, dass sich die am Ausgang bereitgestellte Wirkleistung der Wechselspannung nach der Netzfrequenz richtet. Ist diese Netzfrequenz hoch - d.h. ist zuviel Leistung in dem Wechselstromnetz - speisen die netzstützenden stromstellenden Wechselrichter weniger Wirkleistung ein als bei niedriger Netzfrequenz, die ein Anzeichen für zu wenig Leistung in dem Wechselstromnetz ist. Mit diesem Verhalten wirken die Wechselrichter einem Leistungsüberschuss bzw. einer mangelnden Leistung im Netz entgegen, d. h. sie stützen das Wechselstromnetz. Ähnlich sorgt die Q(u) Kennlinie für eine Blindleistungsabgabe des Wechselrichters in Abhängigkeit von der Amplitude der Wechselspannung am Anschlusspunkt des Wechselrichters in dem Wechselstromnetz.

Zusätzlich können auch unabhängig vom aktuellen Netzzustand einspeisende Wechselrichter vorgesehen sein. Hierbei handelt es sich ebenfalls um stromstellende Wechselrichter. Diese speisen jedoch - unabhängig von dem Zustand des Wechselstromnetzes im Allgemeinen ihre maximal mögliche Leistung in das Wechselstromnetz ein. Die Leistung ist nach oben hin lediglich - wie auch bei allen anderen Wechselrichtern - durch die Zufuhr von Primärenergie (z. B. von Einstrahlungsleistung auf die Module eines angeschlossenen Photovoltaikgenerators) oder durch eine gerätespezifische Stromtragfähigkeit begrenzt.

Die beiden letztgenannten Typen stromstellender Wechselrichter können bei dem Schwarzstart nach dem erfindungsgemäßen Verfahren mitwirken und elektrische Leistung zur Unterstützung der Netzbildner bereitstellen. Die Netzbildner, d. h. die spannungsstellenden Wechselrichter allein, bzw. die in diesen hinterlegten Kennlinien f(P) bzw. u(Q) bestimmen jedoch die Eigenschaften der Wechselspannung in dem lokalen Wechselstromnetz. Da der Verlauf der Kennlinien in einer bevorzugten Ausführungsform über den Parkregler bzw. die übergeordnete Steuereinheit gesteuert wird, bestimmt somit der Parkregler bzw. die übergeordnete Steuereinheit die Wechselspannung in dem lokalen Wechselstromnetz.

Bei dem erfindungsgemäßen Verfahren kann die mit dem ersten Wechselrichter in dem Wechselstromnetz aufgebaute Wechselspannung nicht nur bzgl. ihrer Amplitude, sondern auch ihrer Frequenz von den Nennwerten des Wechselstromnetzes abweichen. Insbesondere kann sie eine von einer Nennfrequenz des Wechselstromnetzes um mindestens 10 % abweichende Frequenz aufweisen. Je nach Vorherrschen kapazitiver oder induktiver Lasten in dem Wechselstromnetz ist zur Erleichterung des Schwarzstarts eine im Vergleich zu der Nennfrequenz des Wechselstromnetzes niedrigere oder höhere Frequenz der ersten Wechselspannung zu wählen. Bei einer niedrigeren Frequenz und kapazitiven Lasten wird die Aufnahme von Blindleistung durch die kapazitiven Lasten reduziert. Umgekehrt verhält es sich mit induktiven Lasten. Die nach dem Zuschalten des zweiten Wechselrichters in dem Wechselstromnetz aufgebaute zweite Wechselspannung kann dann eine an die Nennfrequenz des Wechselstromnetzes weiter angenäherte Frequenz aufweisen.

Dieses Konzept der reduzierten Leistungsaufnahme durch das Wechselstromnetz beim Schwarzstart durch das Aufbauen einer Wechselspannung mit zunächst von der Nennfrequenz des Wechselstromnetzes abweichender Frequenz kann nicht nur ergänzend sondern auch alternativ zu dem Konzept des Aufbaus einer Wechselspannung mit gegenüber dem Nennwert des Wechselstromnetzes zunächst reduziertem Effektivwert angewandt werden. Das heißt konkret, dass die mit dem ersten Wechselrichter aufgebaute erste Wechselspannung bereits die Nennspannung des Wechselstromnetzes erreichen, aber eine von der Nennfrequenz des Wechselstromnetzes um mindestens 10 % abweichende Frequenz aufweisen kann. Nach dem Zuschalten des zweiten Wechselrichters kann dann eine zweite Wechselspannung von der Nennspannung des Wechselstromnetzes aufgebaut werden, die eine weiter an die Nennfrequenz des Wechselstromnetzes angenäherte Frequenz aufweist.

Dieses Verfahren kann auch in mehr als zwei Stufen durchgeführt werden. Dabei können sich die Frequenzen von zwei nacheinander aufgebauten Wechselspannungen um mindestens 10 % der bereits näher an der Nennfrequenz des Wechselstromnetzes liegenden Frequenz voneinander unterscheiden. Insbesondere bei einem Schwarzstart in wenigen Stufen kann dieser Unterschied auch mindestens 25 % oder mindestens 50 %, in Einzelfällen sogar mindestens 75 % betragen. Eine sinnvolle Obergrenze für diesen Unterschied liegt bei 85 %.

Alle in Bezug auf dieses zweite erfindungsgemäße Verfahren für einen Schwarzstart eines Kraftwerks beschriebenen Maßnahmen können auch bei dem ersten erfindungsgemäßen Verfahren zur Anwendung kommen. Umgekehrt ist jede Maßnahme, die oben im Zusammenhang mit dem ersten erfindungsgemäßen Verfahren beschrieben wurde, auch auf das zweite erfindungsgemäße Verfahren anwendbar, und zwar ohne dass die erste in dem Wechselstromnetz aufgebaute Nennspannung einen gegenüber der Nennspannung des Wechselstromnetzes reduzierten Effektivwert aufweisen muss, soweit die oben beschriebenen Maßnahmen nicht zwingend eine auch bezüglich ihres Effektivwerts reduzierte Wechselspannung erfordert.

Bei einem erfindungsgemäßen Kraftwerk mit mehreren einem lokalen Wechselstromnetz zuschaltbaren Wechselrichtern ist eine übergeordnete Steuereinheit vorgesehen, die bei einem Schwarzstart die Wechselrichter dem Wechselstromnetz gemäß einem der oben beschriebenen erfindungsgemäßen Verfahren zuschaltet. Die übergeordnete Steuereinheit bestimmt dabei auch, welcher Wechselrichter der erste ist, der die erste Wechselspannung in dem lokalen Wechselstromnetz aufbaut und welche Wechselrichter dem Wechselstromnetz danach in welcher Reihenfolge zugeschaltet werden. Zudem kann es die übergeordnete Steuereinheit sein, die die Spannungs- und Frequenzstatiken der einzelnen Wechselrichter erfindungsgemäß verschiebt. Sobald die Nennspannung in dem lokalen Wechselstromnetz erreicht ist, ist es auch möglich, dass sich die weiteren Wechselrichter selbsttätig, d. h. ohne Koordinierung durch die übergeordnete Steuereinheit, dem lokalen Wechselstromnetz zuschalten. Mit dem Ziel, die während des Zuschaltens stets nie ganz zu vermeidenden Ausgleichsströme in einem vertretbaren Rahmen zu halten, ist es jedoch vorteilhaft, auch hier die Zuschaltung in koordinierter Art und Weise, beispielsweise durch eine immanent in den Wechselrichtern hinterlegte Zuschaltreihenfolge oder aber über die übergeordnete Steuereinheit, durchzuführen.

Die übergeordnete Steuereinheit kann seine Energieversorgung direkt von einer oder mehreren eingangsseitig an die Wechselrichter angeschlossenen Gleichstromquellen erfahren. Er kann für Zeiten, in denen keine Energie von extern zur Verfügung steht, auch über eine eigene Energieversorgung, beispielsweise auf Basis einer Batterie, verfügen.

Die an die Wechselrichter angeschlossenen Gleichstromquellen können insbesondere Photovoltaikgeneratoren sein, die grundsätzlich elektrische Energie ohne anfängliche Zufuhr von Energie von extern generieren können. Prinzipiell ist das erfindungsgemäße Verfahren jedoch auch auf einen Windpark mit mehreren Windkrafträdern übertragbar. Auch hier bietet sich das Verfahren an, wenn der Eigenbedarf des Windparks bei Nennspannung nicht von einem einzelnen an ein Windkraftrad angeschlossenen Wechselrichter bereitgestellt werden kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: Weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von "einem" Element die Rede ist, ist dies so zu verstehen, dass genau ein Element, zwei Elemente oder mehr Elemente vorhanden sind. Dies gilt hier auch dann, wenn beispielsweise von "einem ersten" oder "einem zweiten" oder auch "einem weiteren" Element die Rede ist. Auch dann können genau ein, zwei oder mehr erste, zweite oder weitere Elemente vorhanden sein.

Diese explizit genannten Merkmale können durch andere Merkmale ergänzt werden oder die einzigen Merkmale sein, die das jeweilige Verfahren oder das jeweilige Kraftwerk aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden unter Bezugnahme auf die beigefügten Zeichnungen anhand von Ausführungsbeispielen näher erläutert und beschrieben.
- **Fig. 1**: ist ein Prinzipschaltbild eines Kraftwerks mit mehreren Wechselrichtern und einem Parkregler.
- **Fig. 2**: ist ein Flussdiagramm für den Ablauf eines erfindungsgemäßen Verfahrens für einen Schwarzstart des Kraftwerks gemäß Fig. 1.
- **Fig. 3**: zeigt bei dem erfindungsgemäßen Verfahren ausgenutzte Frequenz- und Spannungsstatiken der Wechselrichter des Kraftwerks.
- **Fig. 4**: ist eine Auftragung des Eigenbedarfs eines lokalen Wechselstromnetzes und der Leistungsfähigkeit von Wechselrichtern des Kraftwerks gemäß Fig. 1 über einer Wechselspannung in dem Wechselstromnetz.
- **Fig. 5**: ist eine Auftragung der bei dem Verfahren gemäß Fig. 2 von dem dem lokalen Wechselstromnetz zuerst zugeschalteten Wechselrichter abgegebenen Scheinleistung und des von dieser Scheinleistung für den Eigenbedarf des Wechselstromnetzes aufgewandten Anteils.
- **Fig. 6**: ist eine Auftragung der Belastung des dem lokalen Wechselstromnetz zuerst zugeschalteten Wechselrichters bei dem Verfahren gemäß Fig. 2.

### FIGURENBESCHREIBUNG

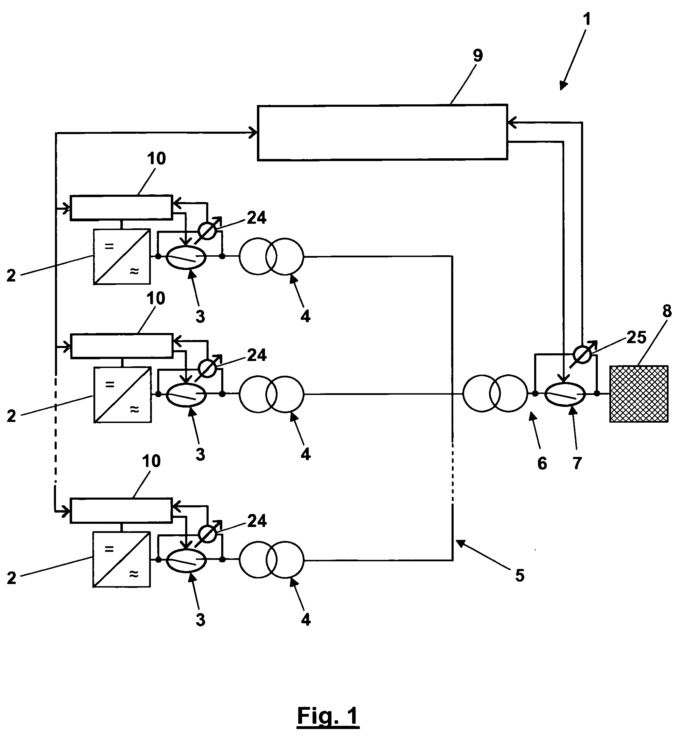

Das in **Fig. 1** dargestellte Kraftwerk 1 umfasst eine Mehrzahl von Wechselrichtern 2, von denen drei dargestellt sind. Die Zahl der Wechselrichter 2 kann aber deutlich größer sein und beispielsweise 42 betragen. Die Wechselrichter 2 sind über Netzschalter 3 und Transformatoren 4 einem lokalen Wechselstromnetz 5 zuschaltbar. Das lokale Wechselstromnetz 5 wiederum ist über einen Haupttransformator 6 und einen Hauptnetzschalter 7 als Netzanbindungspunkt einem externen Wechselstromnetz 8 zuschaltbar. Das Zuschalten über den Hauptnetzschalter 7 erfolgt durch einen Parkregler 9 als übergeordnete Steuereinheit. Der Parkregler 9 kommuniziert zudem mit Reglern 10 der einzelnen Wechselrichter, was durch gepfeilte Verbindungslinien veranschaulicht ist. Zur Synchronisation der Ausgangsspannung der zuzuschaltenden Wechselrichter 2 mit der im lokalen Wechselstromnetz 5 - beziehungsweise an den Orten der Netzschalter 3 - vorliegenden Wechselspannung sind jeweils Spannungsmesser 24 vorgesehen. Diese detektieren eine Spannungsdifferenz zwischen beiden Seiten der jeweiligen Netzschalters 3 und kommunizieren diese an die entsprechenden Regler 10 der Wechselrichter 2. Desweiteren sind die Spannungsmesser 24 dafür ausgelegt, gegebenenfalls vorhandene Frequenz- und Phasenunterschiede zwischen beiden Seiten der jeweiligen Netzschalters 3 zu detektieren und an die Regler 10 der Wechselrichter zu kommunizieren. Die Regler 10 regeln den Betrieb der Wechselrichter 2 grundsätzlich in Abhängigkeit der am Ausgang der Wechselrichter 2 anliegenden Wechselspannung. Hierbei handelt es sich um die Wechselspannung in dem lokalen Wechselstromnetz 5 übersetzt durch das Übersetzungsverhältnis des jeweiligen Transformators 4. Eingangsseitig sind Gleichstromquellen an die Wechselrichter 2 angeschlossen, bei denen es sich insbesondere um Photovoltaikgeneratoren handeln kann und die in Fig. 1 nicht dargestellt sind. Das Wechselstromnetz 5, wobei mit diesem Begriff hier insbesondere das Leitungsnetz, das die einzelnen Wechselrichter untereinander und mit dem Hauptnetzschalter 7 verbindet, sowie die Transformatoren 4 und 6 gemeint ist, weist typischerweise große Leitungslängen auf. Hieraus resultieren hohe Leitungskapazitäten und entsprechend ein bezogen auf die Nennleistung eines einzelnen Wechselrichters 2 hoher Eigenbedarf des Wechselstromnetzes 5 an elektrischer Leistung. Dieser Eigenbedarf an elektrischer Leistung steigt quadratisch mit der Wechselspannung in dem Wechselstromnetz 5 an, weil er im Wesentlichen auf den Leitungskapazitäten beruht. Hiervon macht das erfindungsgemäße Verfahren beim Zuschalten der einzelnen Wechselrichter 2 zu dem lokalen Wechselstromnetz 5 bei einem sogenannten Schwarzstart Gebrauch, um den Wechselrichter 2, der dem Wechselstromnetz 5 zuerst zugeschaltet wird, durch den Eigenbedarf des Wechselstromnetzes 5 nicht zu überlasten.

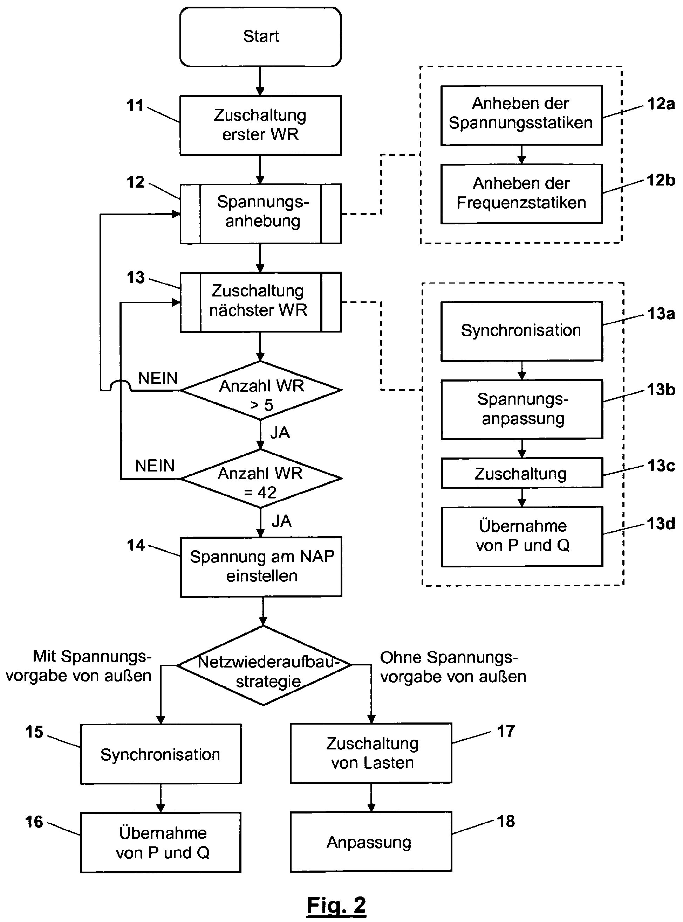

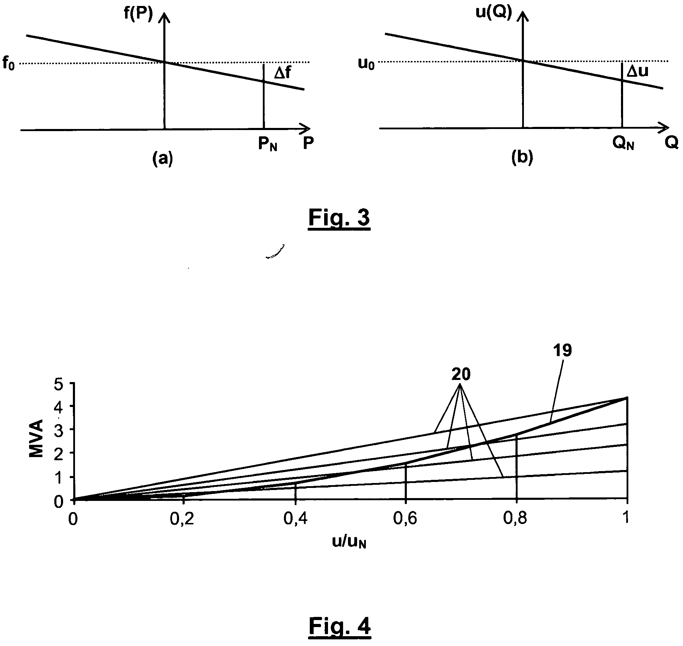

Das in **Fig. 2** in Form eines Flussdiagramms skizzierte Verfahren zum Zuschalten der Wechselrichter 2 zu dem lokalen Wechselstromnetz 5 gemäß Fig. 1 bei einem sogenannten Schwarzstart, d. h. ohne Zufuhr von elektrischer Energie aus dem externen Wechselstromnetz 8, beginnt nach dem Starten mit einem Schritt 11, in dem ein erster Wechselrichter 2 dem Wechselstromnetz 2 zunächst leistungslos zugeschaltet wird. Da die Spannung in dem Wechselstromnetz 5 null ist, bedeutet dies, dass auch der Wechselrichter zunächst keine Spannung ausgibt. In einem nächsten Schritt 12 wird dann die Spannung angehoben. Dies geschieht so, dass in einem Teilschritt 12a die Spannungsstatiken aller an das Wechselstromnetz 5 angeschlossenen Wechselrichter 2 angehoben werden. Auf diese Weise erhöht sich die Ausgangsspannung der angeschlossenen Wechselrichter 2 und damit auch die Höhe der Wechselspannung in dem Wechselstromnetz 5, so dass bei der im Wechselstromnetz 5 vorliegenden Blindlast eine vorgegebene Wechselspannung erreicht wird. Dabei ist die Spannungsstatik eine in **Fig. 3(b)** dargestellte Spannungs-Blindleistungs-Kennlinie u(Q), wobei u die Wechselspannung am Ausgang des jeweiligen Wechselrichters 2 und Q die von dem Wechselrichter ausgegebene Blindleistung ist. Mit dem ersten dem Wechselstromnetz 5 zugeschalteten Wechselrichter 2 wird in dem Schritt 12a nicht versucht, direkt die Nennspannung des Wechselstromnetzes 5 zu erreichen. Vielmehr wird eine deutlich reduzierte erste Wechselspannung eingestellt, die hier beispielhaft nur 1/5 der Nennspannung beträgt.

Eine in **Fig. 3(a)** dargestellte Frequenzstatik, d. h. eine Frequenz-Wirkleistungs-Kennlinie f(P), die neben der Spannungsstatik gemäß Fig. 3(b) in jedem Wechselrichter 2 abgelegt ist, ist beim Zuschalten des ersten Wechselrichters 2 zu dem Wechselstromnetz 5 so justiert, dass die Wechselspannung, die der Wechselrichter 2 bereitstellt, bei einer Wirkleistung P = 0 die Nennfrequenz f₀ des Wechselstromnetzes 5 aufweist. Durch die Anhebung der Spannung im Teilschritt 12a steigt die von dem Wechselrichter 2 abgegebene Wirkleistung P an, und damit sinkt die Frequenz f unter die Nennfrequenz f₀ des Wechselstromnetzes ab. Dieses Absinken der Frequenz f wird in einem Teilschritt 12b durch Anheben der Frequenzstatik der an das Wechselstromnetz 5 angeschlossenen Wechselrichter 2, hier zunächst nur des zuerst zugeschalteten Wechselrichters 2, ausgeglichen. Hiernach liegt in dem Wechselstromnetz 5 die erste Wechselspannung mit zwar nur 1/5 der Nennspannung, aber der Nennfrequenz f₀ des Wechselstromnetzes 5 an.

In dem folgenden Schritt 13 wird dem Wechselstromnetz 5 ein weiterer Wechselrichter 2 zugeschaltet. In einem ersten Teilschritt 13a erfolgt dazu eine Synchronisation des nächsten Wechselrichters 2 mit Frequenz und Phase der Wechselspannung in dem Wechselstromnetz 5. Dabei wird die Frequenzstatik f(P) gegebenenfalls so nachgestellt, dass bei der tatsächlichen Frequenz der Wechselspannung in dem Wechselstromnetz die Wirkleistung P = 0 ausgegeben wird. Im nächsten Teilschritt 13b erfolgt eine Spannungsanpassung derart, dass der zuzuschaltende Wechselrichter bei der Wechselspannung in dem Wechselstromnetz auch die Blindleistung Q = 0 ausgibt. Hierzu wird die Spannungsstatik u(Q) entsprechend justiert. Diese Justierung erfolgt mit Hilfe der Spannungsmesser 24, die eine Spannungsdifferenz zwischen den Kontakten des Netzschalters 3 für den im folgenden Schritt zuzuschaltenden Wechselrichter 2 detektieren. Damit dieser unmittelbar nach dem Zuschalten auch die Blindleistung Q=0 ausgibt, ist seine Spannungsstatik und damit seine Ausgangsspannung derart zu verschieben, dass der Spannungsmesser 3a am Ort des entsprechenden Netzschalters 3 bereits im geöffneten Zustand des Netzschalters 3 die Spannungsdifferenz 0 detektiert. Im folgenden Teilschritt 13c wird der Wechselrichter 2 dem Wechselstromnetz 5 zunächst leistungslos zugeschaltet. Erst in einem Teilschritt 13d übernimmt der zugeschaltete Wechselrichter 2 einen Anteil am Eigenverbrauch des Wechselstromnetzes 5 von Wirkleistung P und Blindleistung Q. Hierzu erfolgt eine Anpassung seiner Frequenzstatik f(P) und seiner Spannungsstatik u(Q) an die Frequenz- und Spannungsstatiken aller anderen bereits zuvor dem Wechselstromnetz 5 zugeschalteten Wechselrichter 2.

Wenn danach die Anzahl der dem Wechselstromnetz 5 insgesamt zugeschalteten Wechselrichter 2 noch nicht größer als fünf ist, kehrt das Verfahren zu dem Schritt 12 zurück, und in dem Teilschritt 12a wird durch Verschieben der Spannungsstatiken u(Q) aller angeschlossenen Wechselrichter 2 die Wechselspannung in dem Wechselstromnetz 5 auf die nächste, hier um 1/5 der Nennspannung des Wechselstromnetzes 5 höhere Wechselspannung angehoben. Anschließend wird in dem Teilschritt 12b die erneut abgesunkene Frequenz der Wechselspannung durch Verschieben der Frequenzstatiken f(P) aller angeschlossenen Wechselrichter 2 wieder auf die Nennfrequenz des Wechselstromnetzes 5 angehoben.

Wenn nach dem Schritt 13 die Anzahl der dem Wechselstromnetz 5 zugeschalteten Wechselrichter fünf oder größer ist, ist durch die vorherigen Teilschritte 12a bereits die Nennspannung des Wechselstromnetzes 5 erreicht. Die weiteren Wechselrichter 2 können dann jeweils durch den Schritt 13 mit seinen Teilschritten 13a bis 13d zugeschaltet werden. Dabei sind dann die Frequenzstatiken aller zugeschalteten Wechselrichter nach der Übernahme von Leistung P und Blindleistung Q gemäß Teilschritt 13d so abzusenken, dass die Nennfrequenz des Wechselstromnetzes trotz des steigenden Angebots an Leistung - ohne dass der Eigenbedarf des Wechselstromnetzes weiter ansteigt - eingehalten wird. Wenn alle hier 42 Wechselrichter 2 zugeschaltet sind, kann in einem folgenden Schritt 14 die Spannung am Netzübergabepunkt zu dem externen Netz 8 gemäß Fig. 1, das ist hier der Hauptnetzschalter 7, auf den dort gewünschten Nennwert eingestellt werden. Hierzu werden alle Spannungsstatiken u(Q) und die Frequenzstatiken f(P) entsprechend nachgeführt. Dieser Schritt kann entfallen, wenn das Wechselstromnetz 5 als Inselnetz angelegt ist, das keine oder zumindest normalerweise keine Verbindung zu einem externen Wechselstromnetz 8 hat.

Bei dem in Fig. 2 dargestellten Verfahren ist dann eine Verzweigung abhängig davon vorgesehen, ob eine Spannungsvorgabe von außen erfolgt oder nicht. Hiernach unterscheidet sich die weitere Netzwiederaufbaustrategie. Bei Spannungsvorgabe von außen durch das externe Wechselstromnetz 8 erfolgt in einem Schritt 15 eine Synchronisation mit dem Wechselstromnetz 8 und in einem Schritt 16 nach Zuschalten des Wechselstromnetzes 5 zu dem Wechselstromnetz 8 über den Hauptnetzschalter 7 die Übernahme von Wirkleistung P und Blindleistung Q durch das Kraftwerk 1. Auch hierzu können wieder die Frequenz- und Spannungsstatiken f(P) und u(Q) der Wechselrichter 2 vor und nach dem Zuschalten entsprechend angepasst werden, so, dass einerseits ein wirk- und blindleistungsloses Zuschalten des lokalen Wechselstromnetzes 5 an das externe Wechselstromnetz 8 erfolgt, und andererseits nach dem Zuschalten eine kontrollierte Bereitstellung von Wirk- und Blindleistung durch das lokale Wechselstromnetz 5 erfolgt. Zur Durchführung der leistungslosen Zuschaltung ist ein Spannungsmesser 25 am Ort des Hauptnetzschalters 7 vorgesehen (siehe Fig. 1). Dieser detektiert eine Spannungsdifferenz zwischen den Kontakten des geöffneten Hauptnetzschalters 7 und kommuniziert diese an den Parkregler 9.

Ohne Spannungsvorgabe von außen werden in einem Schritt 17 dem Wechselstromnetz 5 als Inselnetz Lasten zugeschaltet, und in einem folgenden Schritt 18 können die Frequenz- und Spannungsstatiken der Wechselrichter 2 so nachgeführt werden, dass bei diesen Lasten Nennspannung und Nennfrequenz in dem Wechselstromnetz 5 erhalten bleiben.

Das in Fig. 2 dargestellte Verfahren wird von dem Parkregler 9 gemäß Fig. 1 im Wesentlichen durch Einwirkung auf die Regler 10 der Wechselrichter gesteuert. Wenn das Verfahren durchgeführt ist, muss der Parkregler 9 nur noch eingreifen, wenn die Schritte 16 oder 18 bei Veränderung der externen Bedingungen des Wechselstromnetzes 8 oder Zuschalten weiterer Lasten zu dem Wechselstromnetz 5 so stark variieren, dass eine Anpassung der Frequenz- und Spannungsstatiken der Wechselrichter 2 erforderlich ist.

**Fig. 4** ist eine Auftragung des Eigenbedarfs des Wechselstromnetzes 5 für ein beispielhaftes Kraftwerk mit 42 Wechselrichtern, die eingangsseitig jeweils an Photovoltaikgeneratoren angeschlossen sind. Dabei ist der Eigenbedarf über einem Quotienten aus der Wechselspannung u in dem Wechselstromnetz und der Nennspannung U_{N} des Wechselstromnetzes 5 aufgetragen. Der Eigenbedarf 19 steigt quadratisch mit der Spannung u an, weil er im Wesentlichen auf den Leitungskapazitäten des Wechselstromnetzes 5 beruht. In Fig. 4 sind zusätzlich Leistungsfähigkeiten 20 einzelner Wechselrichter 2 über der Spannung u aufgetragen, die bei gleichbleibendem Strom linear von der Spannung u abhängen.

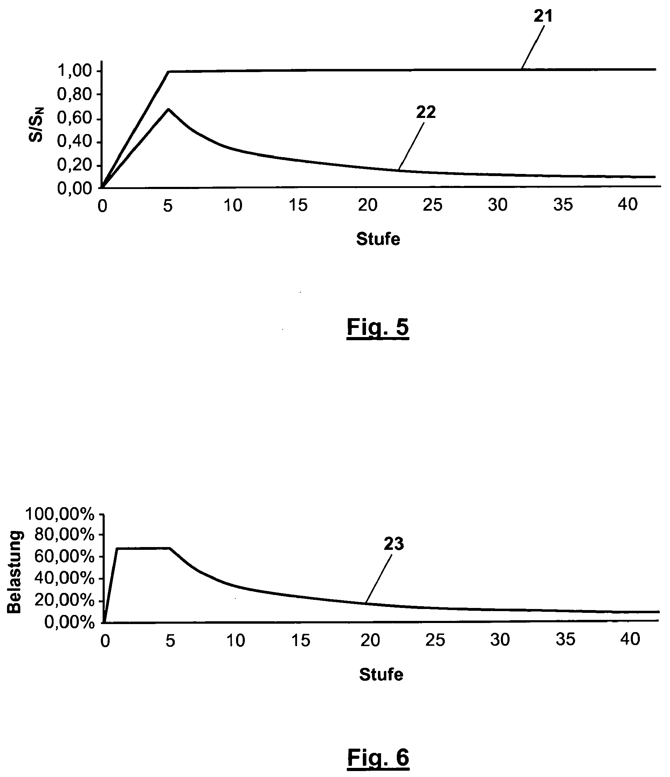

**Fig. 5** zeigt die Scheinleistungsfähigkeit 21, also die verfügbare Scheinleistung eines Wechselrichters 2 über die Stufen des in Fig. 2 dargestellten Verfahrens beim Zuschalten der insgesamt 42 Wechselrichter normiert auf seine Scheinleistungsfähigkeit S_{N} bei der Nennspannung des Wechselstromnetzes 5. Zugleich ist der dabei von ihm übernommene Anteil 22 des Eigenbedarfs des Wechselstromnetzes 5 aufgetragen. Über die ersten fünf Stufen steigt die Scheinleistungsfähigkeit 21 mit der ansteigenden Wechselspannung in dem Wechselstromnetz 5 linear an. Gleichzeitig steigt auch der Anteil 22 des Wechselrichters 2 an dem Eigenbedarf linear an, weil zwar über diese Stufen hinweg weitere Wechselrichter zugeschaltet werden, sich aber der Eigenbedarf des Wechselstromnetzes 5 quadratisch erhöht. Erst wenn mehr als fünf Wechselrichter zugeschaltet werden, fällt der Anteil 22 letztlich auf 1/42 des Eigenbedarfs des Wechselstromnetzes 5 ab.

Fig. 6 ist eine Auftragung der Belastung des ersten dem Wechselstromnetz 5 zugeschalteten Wechselrichters 2 über die Stufen des Verfahrens gemäß Fig. 2, d. h. der auf den Wechselrichter einwirkenden absoluten Last bezogen auf seine Leistungsfähigkeit, die mit der Wechselspannung in dem Wechselstromnetz 5 linear ansteigt. Die Leistungsfähigkeit wird dabei nie mehr als zu 70 % ausgeschöpft, um eine Leistungsreserve vorzuhalten. Über die erste Stufe des Verfahrens hinweg, also beim Zuschalten des ersten Wechselrichters 2 zu dem Wechselstromnetz 5, steigt die Belastung bezogen auf die Leistungsfähigkeit bei der ersten Wechselspannung an. Über die nächsten vier Stufen bleibt die Belastung dann maximal, wobei es zu Beginn jeder Stufe einen hier nicht dargestellten Rückgang der Belastung gibt, wenn ein weiterer Wechselrichter zugeschaltet wird und dieser dann sowohl Wirkleistung als auch Blindleistung übernimmt, ohne dass die Wechselspannung in dem Wechselstromnetz 5 und damit der Eigenbedarf des Wechselstromnetzes bereits auf die nächst Stufe angehoben wurde. In jedem Fall fällt die Belastung 23 ab dem Zuschalten des sechsten Wechselrichters 2 in Stufe 6 sukzessive ab. Sie steigt erst dann wieder an, wenn dem Wechselstromnetz 5 direkt eine Last zugeschaltet wird oder das Wechselstromnetz 5 zur Einspeisung von elektrischer Energie mit dem externen Wechselstromnetz 8 verbunden wird.

### BEZUGSZEICHENLISTE

- 1: Kraftwerk
- 2: Wechselrichter
- 3: Netzschalter
- 4: Transformator
- 5: lokales Wechselstromnetz
- 6: Haupttransformator
- 7: Hauptnetzschalter
- 8: externes Wechselstromnetz
- 9: Parkregler
- 10: Regler
- 11: Schritt
- 12: Schritt
- 12a: Teilschritt
- 12b: Teilschritt
- 13: Schritt
- 13a: Teilschritt
- 13b: Teilschritt
- 13c: Teilschritt
- 13d: Teilschritt
- 14: Schritt
- 15: Schritt
- 16: Schritt
- 17: Schritt
- 18: Schritt
- 19: Eigenbedarf
- 20: Leistungsfähigkeit
- 21: Scheinleistungsfähigkeit
- 22: Anteil Eigenbedarf
- 23: Belastung
- 24: Spannungsmesser
- 25: Spannungsmesser
- u: Spannung
- f: Frequenz
- f₀: Nennfrequenz
- P: Wirkleistung
- Q: Blindleistung
- S: Scheinleistung
- S_{N}: Nennleistung
- u_{N}: Nennspannung
- f(P): Frequenzstatik
- u(Q): Spannungsstatik

## Patentansprüche

1. Verfahren für einen Schwarzstart eines Kraftwerks (1) mit mehreren einem lokalen Wechselstromnetz (5) zuschaltbaren Wechselrichtern (2),
- wobei mit einem ersten Wechselrichter (2) eine Wechselspannung in dem Wechselstromnetz (5) aufgebaut wird und
- wobei ein zweiter Wechselrichter (2) nach Synchronisation mit der Wechselspannung dem Wechselstromnetz (5) zugeschaltet wird,
**dadurch gekennzeichnet,**
- **dass** die mit dem ersten Wechselrichter (2) aufgebaute erste Wechselspannung gegenüber einer Nennspannung des Wechselstromnetzes (5) um mindestens ein Viertel reduziert ist und
- **dass** nach dem Zuschalten des zweiten Wechselrichters (2) eine gegenüber der ersten Wechselspannung erhöhte zweite Wechselspannung in dem Wechselstromnetz (5) aufgebaut wird.

2. Verfahren nach Anspruch 1, **dadurch gekennzeichnet, dass** ein dritter Wechselrichter (2) nach Synchronisation mit der zweiten Wechselspannung dem Wechselstromnetz (5) zugeschaltet wird und dass nach dem Zuschalten des dritten Wechselrichters (2) eine gegenüber der zweiten Wechselspannung erhöhte dritte Wechselspannung in dem Wechselstromnetz (5) aufgebaut wird.

3. Verfahren nach einem der vorhergehenden Ansprüche, **dadurch gekennzeichnet, dass** mehrere Wechselrichter (2) mit einer der Wechselspannungen synchronisiert und dann dem Wechselstromnetz (5) zugeschaltet werden.

4. Verfahren nach einem der vorhergehenden Ansprüche, **dadurch gekennzeichnet, dass** jeder Wechselrichter (2) dem Wechselstromnetz (5) leistungslos zugeschaltet wird.

5. Verfahren nach Anspruch 4, **dadurch gekennzeichnet, dass** eine Spannungsstatik und/oder eine Frequenzstatik eines jeweils zuzuschaltenden Wechselrichters (2) und/oder von bereits zugeschalteten Wechselrichtern (2) so verschoben werden, dass beim Zuschalten keine Leistung in das Wechselstromnetz (5) fließt.

6. Verfahren nach einem der vorhergehenden Ansprüche, **dadurch gekennzeichnet, dass** zur Verteilung einer Last auf alle dem Wechselstromnetz (5) zugeschalteten Wechselrichter (2) eine Frequenzstatik und eine Spannungsstatik eines zuletzt zugeschalteten Wechselrichters (2) an die Frequenzstatiken und Spannungsstatiken aller schon zuvor zugeschaltet gewesenen Wechselrichter (2) angepasst werden.

7. Verfahren nach einem der vorhergehenden Ansprüche, **dadurch gekennzeichnet, dass** eine der Wechselspannungen mit mehreren dem Wechselstromnetz (5) bis dahin zugeschalteten Wechselrichtern (2) in dem Wechselstromnetz (5) aufgebaut wird.

8. Verfahren nach Anspruch 7, **dadurch gekennzeichnet, dass** zum Aufbauen der nächsten Wechselspannung Spannungsstatiken mehrerer dem Wechselstromnetz (5) zugeschalteter Wechselrichter (2) angehoben werden.

9. Verfahren nach einem der vorhergehenden Ansprüche, **dadurch gekennzeichnet, dass** nach dem Aufbauen einer der Wechselspannungen Frequenzstatiken mehrerer dem Wechselstromnetz (5) zugeschalteter Wechselrichter (2) angehoben werden, um mit der jeweiligen Wechselspannung eine Nennfrequenz des Wechselstromnetzes (5) zu erreichen.

10. Verfahren nach einem der vorhergehenden Ansprüche, **dadurch gekennzeichnet, dass** mit dem ersten Wechselrichter (2) die erste Wechselspannung in dem Wechselstromnetz (5) beginnend bei einer Nennfrequenz des Wechselstromnetzes (5) aufgebaut wird.

11. Verfahren nach einem der Ansprüche 1 bis 9, **dadurch gekennzeichnet,**
- **dass** die mit dem ersten Wechselrichter (2) in dem Wechselstromnetz (5) aufgebaute erste Wechselspannung eine von einer Nennfrequenz des Wechselstromnetzes (5) um mindestens 10 % abweichende Frequenz aufweist und
- **dass** die nach dem Zuschalten des zweiten Wechselrichters (2) in dem Wechselstromnetz (5) aufgebaute zweite Wechselspannung eine an die Nennfrequenz des Wechselstromnetzes (5) weiter angenäherte Frequenz aufweist.

12. Verfahren für einen Schwarzstart eines Kraftwerks (1) mit mehreren einem lokalen Wechselstromnetz (5) zuschaltbaren Wechselrichtern (2),
- wobei mit einem ersten Wechselrichter (2) eine Wechselspannung in dem Wechselstromnetz (5) aufgebaut wird und
- wobei ein zweiter Wechselrichter (2) nach Synchronisation mit der Wechselspannung dem Wechselstromnetz (5) zugeschaltet wird,
**dadurch gekennzeichnet,**
- **dass** die mit dem ersten Wechselrichter (2) aufgebaute erste Wechselspannung eine von einer Nennfrequenz des Wechselstromnetzes (5) um mindestens 10 % abweichende Frequenz aufweist und
- **dass** nach dem Zuschalten des zweiten Wechselrichters (2) eine zweite Wechselspannung in dem Wechselstromnetz (5) aufgebaut wird, die eine an die Nennfrequenz des Wechselstromnetzes (5) weiter angenäherte Frequenz aufweist.

13. Verfahren nach Anspruch 11 oder 12, **dadurch gekennzeichnet, dass** ein dritter Wechselrichter (2) nach Synchronisation mit der zweiten Wechselspannung dem Wechselstromnetz (5) zugeschaltet wird und dass nach dem Zuschalten des dritten Wechselrichters (2) eine dritte Wechselspannung in dem Wechselstromnetz (5) aufgebaut wird, die eine an die Nennfrequenz des Wechselstromnetzes (5) weiter angenäherte Frequenz aufweist.

14. Kraftwerk (1) mit mehreren einem lokalen Wechselstromnetz (5) zuschaltbaren Wechselrichtern (2) und einer übergeordneten Steuereinheit, die bei einem Schwarzstart die Wechselrichter (2) dem Wechselstromnetz (5) gemäß dem Verfahren nach einem der vorhergehenden Ansprüche zuschaltet.

15. Kraftwerk (1) nach Anspruch 14, **dadurch gekennzeichnet, dass** die Wechselrichter (2) eingangsseitig an Photovoltaikgeneratoren angeschlossen sind.

## Claims

1. A method for black-starting a power station (1) comprising a plurality of inverters (2) connectable to a local AC grid (5),
- wherein an AC voltage is built up in the AC grid (5) by a first inverter (2), and
- wherein a second inverter (2), after synchronization with the AC voltage, is connected to the AC grid (5),
**characterized**
- **in that** the first AC voltage built up by the first inverter (2) is reduced by at least a quarter with respect to a rated voltage of the AC grid (5), and
- **in that**, once the second inverter (2) has been connected, a second AC voltage, which is increased with respect to the first AC voltage, is built up in the AC grid (5).

2. The method as claimed in claim 1, **characterized in that** a third inverter (2), after synchronization with the second AC voltage, is connected to the AC grid (5), and **in that**, once the third inverter (2) has been connected, a third AC voltage, which is increased with respect to the second AC voltage, is built up in the AC grid (5).

3. The method as claimed in one of the preceding claims, **characterized in that** a plurality of inverters (2) are synchronized with one of the AC voltages and then connected to the AC grid (5).

4. The method as claimed in one of the preceding claims, **characterized in that** each inverter (2) is connected powerlessly to the AC grid (5).

5. The method as claimed in claim 4, **characterized in that** a voltage droop and/or a frequency droop of an inverter (2) to be connected in each case and/or of already connected inverters (2) is/are shifted such that, on connection, no power flows into the AC grid (5).

6. The method as claimed in one of the preceding claims, **characterized in that**, in order to distribute a load among all of the inverters (2) connected to the AC grid (5), a frequency droop and a voltage droop of a most recently connected inverter (2) are matched to the frequency droops and voltage droops of all of the inverters (2) that have already previously been connected.

7. The method as claimed in one of the preceding claims, **characterized in that** one of the AC voltages is built up in the AC grid (5) by a plurality of the inverters (2) connected to the AC grid (5) up to that point.

8. The method as claimed in claim 7, **characterized in that**, in order to build up the next AC voltage, voltage droops of a plurality of the inverters (2) connected to the AC grid (5) are increased.

9. The method as claimed in one of the preceding claims, **characterized in that**, once one of the AC voltages has been built up, frequency droops of a plurality of the inverters (2) connected to the AC grid (5) are increased in order to achieve a rated frequency of the AC grid (5) with the respective AC voltage.

10. The method as claimed in one of the preceding claims, **characterized in that** the first AC voltage in the AC grid (5) is built up by the first inverter (2) beginning at a rated frequency of the AC grid (5).

11. The method as claimed in one of claims 1 to 9, **characterized**
- **in that** the first AC voltage built up by the first inverter (2) in the AC grid (5) has a frequency which deviates from a rated frequency of the AC grid (5) by at least 10%, and
- **in that** the second AC voltage built up once the second inverter (2) in the AC grid (5) has been connected has a frequency which is closer to the rated frequency of the AC grid (5).

12. A method for black-starting a power station (1) comprising a plurality of inverters (2) connectable to a local AC grid (5),
- wherein an AC voltage is built up in the AC grid (5) by a first inverter (2), and
- wherein a second inverter (2), after synchronization with the AC voltage, is connected to the AC grid (5),
**characterized**
- **in that** the first AC voltage built up by the first inverter (2) has a frequency which deviates from a rated frequency of the AC grid (5) by at least 10%, and
- **in that**, once the second inverter (2) has been connected, a second AC voltage is built up in the AC grid (5), which has a frequency closer to the rated frequency of the AC grid (5).

13. The method as claimed in claim 11 or 12, **characterized in that** a third inverter (2), after synchronization with the second AC voltage, is connected to the AC grid (5), and **in that**, once the third inverter (2) has been connected, a third AC voltage is built up in the AC grid (5), which has a frequency closer to the rated frequency of the AC grid (5).

14. A power station (1) comprising a plurality of inverters (2) connectable to a local AC grid (5) and a superordinate control unit, which, during a black start, connects the inverters (2) to the AC grid (5) in accordance with the method as claimed in one of the preceding claims.

15. The power station (1) as claimed in claim 14, **characterized in that** the inverters (2) are connected to photovoltaic generators on the input side.

## Revendications

1. Procédé de démarrage autonome d'une centrale électrique (1) comprenant plusieurs onduleurs (2) pouvant être connectés à un réseau à courant alternatif (5) local,
- une tension alternative étant établie dans le réseau à courant alternatif (5) avec un premier onduleur (2) et
- un deuxième onduleur (2) étant connecté au réseau à courant alternatif (5) après la synchronisation avec la tension alternative,
**caractérisé en ce**
- **que** la première tension alternative établie avec le premier onduleur (2) est réduite d'au moins un quart par rapport à une tension nominale du réseau à courant alternatif (5) et
- **qu'**après la connexion du deuxième onduleur (2), une deuxième tension alternative accrue par rapport à la première tension alternative est établie dans le réseau à courant alternatif (5).

2. Procédé selon la revendication 1, **caractérisé en ce qu'**un troisième onduleur (2) est connecté au réseau à courant alternatif (5) après la synchronisation avec la deuxième tension alternative et **en ce qu'**après la connexion du troisième onduleur (2), une troisième tension alternative accrue par rapport à la deuxième tension alternative est établie dans le réseau à courant alternatif (5).

3. Procédé selon l'une des revendications précédentes, **caractérisé en ce que** plusieurs onduleurs (2) sont synchronisés avec l'une des tensions alternatives et sont ensuite connectés au réseau à courant alternatif (5).

4. Procédé selon l'une des revendications précédentes, **caractérisé en ce que** chaque onduleur (2) est connecté hors puissance au réseau à courant alternatif (5).

5. Procédé selon la revendication 4, **caractérisé en ce qu'**une tension statique et/ou une fréquence statique d'un onduleur (2) respectivement à connecter et/ou des onduleurs (2) déjà connectés sont décalées de telle sorte qu'aucune puissance ne circule dans le réseau à courant alternatif (5) lors de la connexion.

6. Procédé selon l'une des revendications précédentes, **caractérisé en ce que** pour distribuer une charge sur tous les onduleurs (2) connectés au réseau à courant alternatif (5), une tension statique et une fréquence statique d'un onduleur (2) connecté en dernier sont adaptées aux tensions statiques et aux fréquences statiques de tous les onduleurs (2) qui étaient déjà connectés préalablement.

7. Procédé selon l'une des revendications précédentes, **caractérisé en ce que** l'une des tensions alternatives est établie dans le réseau à courant alternatif (5) avec plusieurs des onduleurs (2) connectés jusqu'à ce moment au réseau à courant alternatif (5).

8. Procédé selon la revendication 7, **caractérisé en ce que** pour établir la prochaine tension alternative, les tensions statiques de plusieurs des onduleurs (2) connectés au réseau à courant alternatif (5) sont relevées.

9. Procédé selon l'une des revendications précédentes, **caractérisé en ce qu'**après l'établissement de l'une des tensions alternatives, les fréquences statiques de plusieurs des onduleurs (2) connectés au réseau à courant alternatif (5) sont relevées afin d'atteindre une fréquence nominale du réseau à courant alternatif (5) avec la tension alternative correspondante.

10. Procédé selon l'une des revendications précédentes, **caractérisé en ce que** la première tension alternative est établie dans le réseau à courant alternatif (5) avec le premier onduleur (2) en commençant à une fréquence nominale du réseau à courant alternatif (5).

11. Procédé selon l'une des revendications 1 à 9, **caractérisé en ce**
- **que** la première tension alternative établie dans le réseau à courant alternatif (5) avec le premier onduleur (2) présente une fréquence ayant un écart d'au moins 10 % par rapport à une fréquence nominale du réseau à courant alternatif (5) et
- en ce que la deuxième tension alternative établie dans le réseau à courant alternatif (5) après la connexion du deuxième onduleur (2) présente une fréquence se rapprochant plus de la fréquence nominale du réseau à courant alternatif (5).

12. Procédé de démarrage autonome d'une centrale électrique (1) comprenant plusieurs onduleurs (2) pouvant être connectés à un réseau à courant alternatif (5) local,
- une tension alternative étant établie dans le réseau à courant alternatif (5) avec un premier onduleur (2) et
- un deuxième onduleur (2) étant connecté au réseau à courant alternatif (5) après la synchronisation avec la tension alternative,
**caractérisé en ce**
- **que** la première tension alternative établie avec le premier onduleur (2) présente une fréquence ayant un écart d'au moins 10 % par rapport à une fréquence nominale du réseau à courant alternatif (5) et
- **qu'**après la connexion du deuxième onduleur (2), une deuxième tension alternative est établie dans le réseau à courant alternatif (5), laquelle présente une fréquence se rapprochant plus de la fréquence nominale du réseau à courant alternatif (5).

13. Procédé selon la revendication 11 ou 12, **caractérisé en ce qu'**un troisième onduleur (2) est connecté au réseau à courant alternatif (5) après la synchronisation avec la deuxième tension alternative et **en ce qu'**après la connexion du troisième onduleur (2), une troisième tension alternative est établie dans le réseau à courant alternatif (5), laquelle présente une fréquence se rapprochant plus de la fréquence nominale du réseau à courant alternatif (5).

14. Centrale électrique (1) comprenant plusieurs onduleurs (2) pouvant être connectés à un réseau à courant alternatif (5) local et une unité de commande de supervision qui, lors d'un démarrage autonome, connecte les onduleurs (2) au réseau à courant alternatif (5) conformément au procédé selon l'une des revendications précédentes.

15. Centrale électrique (1) selon la revendication 14, **caractérisée en ce que** les onduleurs (2) sont raccordés du côté de l'entrée à des générateurs photovoltaïques.
